# EUROPEAN PATENT APPLICATION

(11) **EP 2 053 767 A2**
(43) Date of publication of application: **29.04.2009**
(21) Application number: 08253442.1
(22) Date of filing: 23.10.2008
(51) Int. Cl.: H04J 3/16, H04J 3/06

(54) **Data transmission system, transmitter and data transmission control method**

(30) Priority: 23.10.2007 JP 2007275004
(71) Applicant: NEC Corporation, Minato-ku Tokyo (JP)
(72) Inventor: Matsui, Junichiro, Tokyo 108-8001 (JP)
(74) Representative: MacDougall, Alan John Shaw

(57) **Abstract**

A first transmitter transmits input data through a plurality of paths belonging to a path group. A second transmitter receives the data transmitted from the first transmitter through the plurality of paths, temporarily stores an amount of the data corresponding to a phase difference between the plurality of paths in a first buffer to absorb the phase difference, and outputs the data, whose phase difference has been absorbed, through a second buffer. When a path is deleted from the path group, the first transmitter reduces a data rate for data transmitted from the first transmitter to the second transmitter, and then deletes the path from the path group.

## Description

This application is based upon and claims the benefit of priority from Japanese patent application No. 2007-275004, filed on October 23, 2007, the disclosure of which is incorporated herein in its entirety by reference.

### TECHNICAL FIELD

The present invention relates to a data transmission system for transmitting data through a plurality of physically different transmission paths.

### BACKGROUND ART

SDH (Synchronous Digital Hierarchy)/SONET (Synchronous Optical NETwork) is a standard of optical transmission technologies which are originally used for transmission of voice signals.

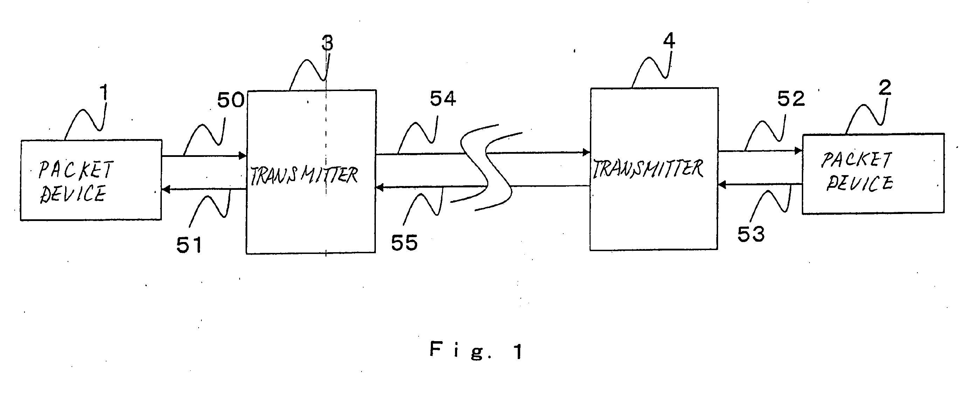

On the other hand, in an Ethernet (registered tradename) network, each node transmits/receives packets using a CSMA/CD (Carrier Sense Multiple Access with Collision Detection) scheme. JP-2005-155558-A and JP-2006-135754-A, for example, describe data transmission systems for transmitting packets over Ethernet networks using the SDH/SONET transmission paths. Fig. 1 shows the configuration of such a data transmission system.

As shown in Fig. 1, the data transmission system comprises packet devices 1, 2 and transmitters 3, 4.

Packet device 1 is connected to transmitter 3 through Ethernet transmission paths 50, 51, while packet device 2 is connected to transmitter 4 through Ethernet transmission paths 52, 53. Transmitter 3 and transmitter 4 are connected through transmission path 54, 55 which form part of an SDH/SONET network (hereinafter called the "SDH/SONET transmission paths").

Packet devices 1, 2 are communication devices which perform known packet processing, for example, a router, a Layer-3 switch, and the like.
Packet devices 1, 2 each comprise a LAN (Local Area Network) interface which supports the CSMA/CD scheme, and transmit/receive MAC (Media Access Control) frames to/from transmitters 3, 4 through this LAN interface.

Transmitters 3, 4 are devices for transmitting data included in MAC frames utilizing SDH/SONET frames. Transmitter 3, 4 comprises a GFP (Generalized Framing Procedure) function defined by G.7041 based on ITU-T (International Telecommunication Union Telecommunication Standardization Sector) Recommendation. Transmitters 3, 4 map MAC frames transmitted from packet devices 1, 2 to SDH/SONET frames using this GFP function, and transmit the SDH/SONET frames to opposing transmitters 4, 3 through SDH/SONET transmission paths 54, 55.

Also, upon receipt of SDH/SONET frames from opposing transmitters 4, 3, transmitters 3, 4 extract MAC frames from the SDH/SONET frames, and transmit the extracted MAC frames to packet devices 1, 2 through Ethernet transmission paths 51, 52.

Further, transmitters 3, 4 comprise a VCAT (Virtual Concatenation) function defined by G.707 based on ITU-T Recommendation, and an LCAS (Link Capacity Adjustment Scheme) function defined by G-7042 based on ITU-T Recommendation (see ITU-T G.7042, "Link capacity adjustment scheme (LCAS) for virtual concatenated signals," November 2001).

The VCAT function is a function for virtually concatenating a plurality of VC paths within SDH/SONET for use as a single VC path. With the utilization of the VCAT function, data rates can be realized independently of hierarchy, for example, VC-3 (43.384 Mbps), VC-4 (149.76 Mbps) and the like, by bundling a plurality of VC (Virtual Container) paths.

The LCAS function is a function for adding or deleting VC paths to dynamically increase or decrease the data rate realized by the VCAT function.

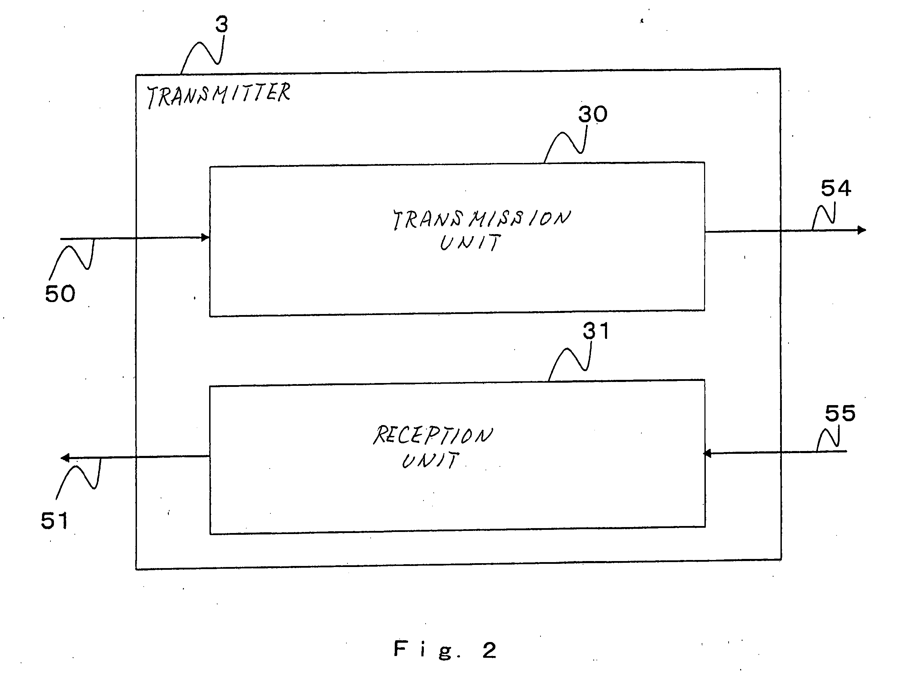

Fig. 2 is a block diagram showing the configuration of transmitter 3 shown in Fig. 1. In this regard, while Fig. 2 shows an exemplary configuration of transmitter 3, transmitter 4 is also similar in configuration.

As shown in Fig. 2, transmitter 3 comprises transmission unit 30 for transmitting SDH/SONET frames to transmitter 4 (not shown) through SDH/SONET transmission path 54, and reception unit 31 for receiving SDH/SONET frames transmitted from transmitter 4 through SDH/SONET transmission paths 54.

A description will be first given of the operation of transmission unit 30 shown in Fig. 2. Shown herein is the operation of transmission unit 30 when SDH/SONET frame is transmitted from transmitter 3 to transmitter 4 through SDH/SONET transmission path 54.

Upon receipt of a MAC frame from packet device 1 (not shown) through Ethernet transmission path 50, transmission unit 30 maps the MAC frame to an SDH/SONET frame, and transmits the SDH/SONET frame to transmitter 4 through SDH/SONET transmission path 54.

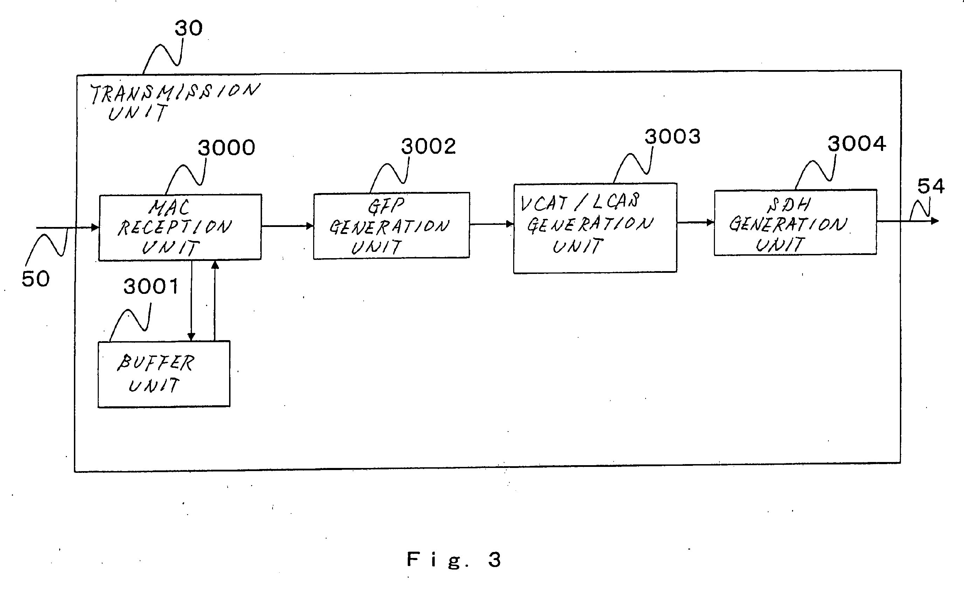

Now, the configuration of transmission unit 30 will be described in detail with reference to Fig. 3.

As shown in Fig. 3, transmission unit 30 comprises MAC reception unit 3000, buffer unit 3001, GFP generation unit 3002, VCAT/LCAS generation unit 3003, and SDH generation unit 3004.

Ethernet transmission path 50 is connected to MAC reception unit 3000, while SDH/SONET transmission path 54 is connected to SDH generation unit 3004.

MAC reception unit 3000 is connected to buffer unit 3001 and GFP generation unit 3002. GFP generation unit 3002 is connected to VCAT/LCAS generation unit 3003, while VCAT/LCAS generation unit 3003 is connected to SDH generation unit 3004.

Upon receipt of a MAC frame from packet device 1 (not shown) through Ethernet Transmission path 50, MAC reception unit 3000 removes a header including SFD (Start of frame delimiter) and Preamble, added to the MAC frame, and stores the MAC frame from which the head has been removed (hereinafter called the "MAC header removed frame") in buffer unit 3001.

MAC reception unit 3000 stores the MAC header removed frame in buffer unit 3001, and reads the MAC header removed frame from buffer unit 3001 in accordance with the data rate on SDH/SONET transmission path 54, and outputs the frame to GFP generation unit 3002. By performing such processing, MAC reception unit 3000 absorbs the difference in data rate between the MAC frame and the SDH/SONET frame.

Upon receipt of the MAC header removed frame from MAC reception unit 3000, GFP generation unit 3002 adds a GFP header to the MAC header removed frame and encapsulates them into a GFP frame. The resulting GFP frame is output to VCAT/LCAS generation unit 3003.

Upon receipt of the GFP frame from GFP generation unit 3002, VCAT/LCAS generation unit 3003 assigns the GFP frame to one of the VCGs (Virtual Concatenation Group), each of which comprises a group of a plurality of VC paths, maps the GFP frame to a payload of a VC path frame of the allocated VCG, and outputs the VC path frame to SDH generation unit 3004. VCAT/LCAS generation unit 3003 maps an idle frame to an empty area, if any, in the payload of the VC path frame when the GFP frame is mapped to the VC path frame.

Upon receipt of the VC path frame from VCAT/LCAS generation unit 3003, SDH generation unit 3004 maps the VC path frame to a payload of an SDH/SONET frame, and transmits the SDH/SONET frame to opposing transmitter 4 (not shown) through SDH/SONET transmission path 54.

Next, a description will be given of the operation of reception unit 31 shown in Fig. 2. Shown herein is the operation of reception unit 31 when an SDH/SONET frame transmitted from transmitter 4 through SDH/SONET transmission path 55 is received by transmitter 3.

Upon receipt of an SDH/SONET frame from transmitter 4 through SDH/SONET transmission path 55, reception unit 31 extracts an MAC frame from the SDH/SONET frame, and transmits the extracted MAC frame to packet device 1 through Ethernet transmission path 51.

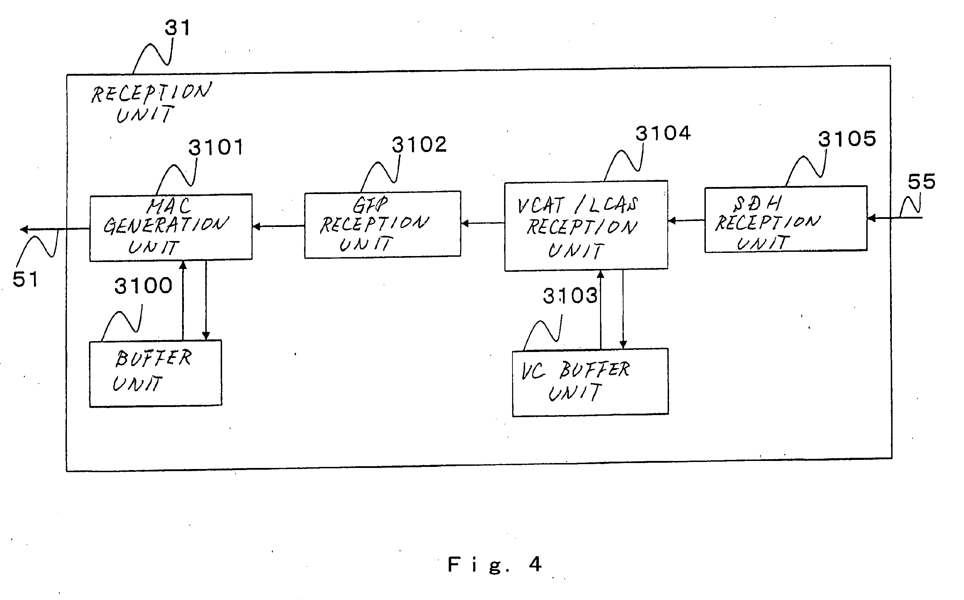

Here, the configuration of reception unit 31 will be described in detail with reference to Fig. 4.

As shown in Fig. 4, reception unit 31 comprises SDH reception unit 3105, VCAT/LCAS reception unit 3104, VC buffer unit 3103, GFP reception unit 3102, MAC generation unit 3101, and buffer unit 3100.

Ethernet transmission path 51 is connected to MAC generation unit 3101, while SDH/SONET transmission path 55 is connected to SDH reception unit 3105.

MAC generation unit 3101 is connected to buffer unit 3100 and GFP reception unit 3102. GFP reception unit 3102 is connected to VCAT/LCAS reception unit 3104, while VCAT/LCAS reception unit 3104 is connected to VC buffer unit 3103 and SDH reception unit 3105.

Upon receipt of an SDH/SONET frame from transmitter 4 (not shown) through SDH/SONET transmission path 55, SDH reception unit 3105 terminates the SDH/SONET frame to extract a VC path frame from its payload, and outputs the extracted VC path frame to VCAT/LCAS reception unit 3104.

Upon receipt of the VC path frame from SDH reception unit 3105, VCAT/LCAS reception unit 3104 classifies the VC path frame in accordance with VCG. VCAT/LCAS reception unit 3104 stores a VC path frame of a VC path with a small propagation delay in VC buffer unit 3103 to absorb the phase difference of each VC path which belongs to the same VCG (phase difference between data transmitted through respective VC paths).

In this regard, multi-frame information is stored in an H4 byte of POH (Path OverHead) included in a VC path frame. The multi-frame information is information for identifying a VC path. In the VCAT scheme, a phase difference of VC paths belonging to the same VCG is detected from multi-frame information, and a VC path frame of a VC path with a small propagation delay is stored in VC buffer unit 3103 to absorb the phase difference among respective VC paths. Thus, a propagation delay time can be made uniform for each VC path output from VCAT/LCAS reception unit 3104.

Upon receipt of the VC path frame from SDH reception unit 3105, VCAT/LCAS reception unit 3104 terminates the VC path frame, and thus extracts a GFP frame and an idle frame from its payload, and outputs the extracted GFP frame and idle frame to GFP reception unit 3102.

Upon receipt of the GFP frame and idle frame from VCAT/LCAS reception unit 3104, GFP reception unit 3102 discards the idle frame, removes the GFP header from the GFP frame to extract a MAC header removed frame, and outputs the MAC header removed frame to MAC generation unit 3101.

Upon receipt of the MAC header removed frame from GFP reception unit 3102, MAC generation unit 3101 adds a header including SFD and Preamble to the MAC header removed frame to thereby generate a MAC frame. MAC generation unit 3101 stores the generated MAC frame in buffer unit 3100, and reads a MAC frame from buffer unit 3100 in accordance with the data rate of Ethernet transmission path 51 for transmission to packet device 1 (not shown), thereby absorbing the difference in data rate between Ethernet transmission path 51 and SDH/SONET transmission path 55.

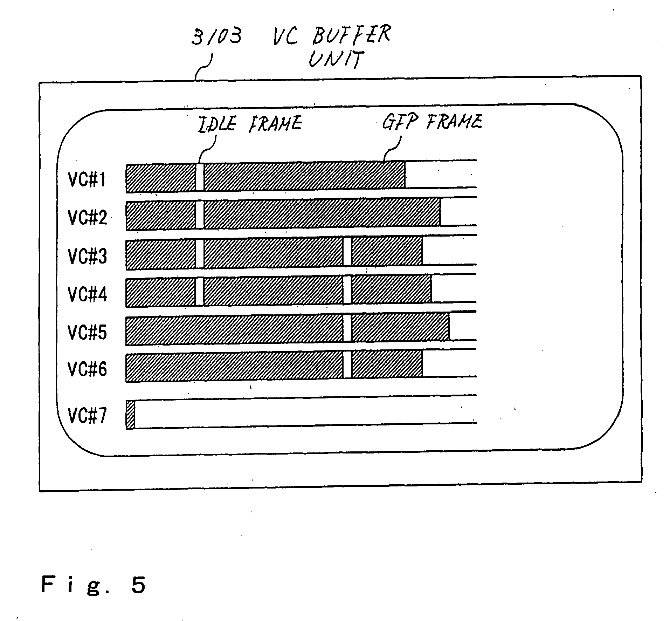

Fig. 5 shows how VC path frames, each including a GFP frame and an idle frame, are stored in VC buffer unit 3103 shown in Fig. 4.

It should be noted that Fig. 5 shows an example in which seven VC paths VC#1 - VC#7 belongs to a member of VCG. Also, Fig. 5 shows an example in which VC#1 through VC#6 have substantially the same propagation delay time, and each VC path frame stored in VC buffer unit 3103 has substantially the same amount of data. Further, Fig. 5 shows an example in which VC#7 presents the largest propagation delay time, and a VC path frame of VC#7 stored in VC buffer unit 3103 has a smallest amount of data. Specifically, the VC paths are the aforementioned VC-4, the propagation delay time of VC#1 through VC#6 is 1 msec, and the propagation delay time of VC#7 is 51 msec.

VCAT/LCAS reception unit 3104 stores each VC path frame from VC#1 to VC#6 in VC buffer unit 3103 to thereby absorb the phase difference between VC#1 - VC#6 and VC#7 which presents the largest propagation delay.

In this event, since VC buffer unit 3103 stores data corresponding to the phase difference (50 msec) of the VC path frames between VC#1 - VC#6 and VC#7, the amount of data stored in VC buffer unit 3103 is calculated to be 44.928 Mbits (=6 x 149.76 Mbps x 50 msec).

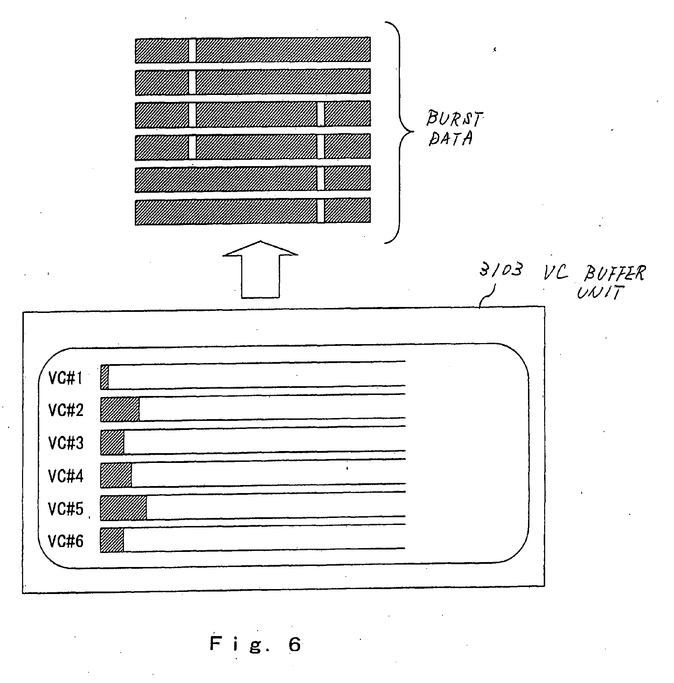

Fig. 6 shows how VC path frames, each including a GFP frame and an idle frame, are stored in VC buffer unit 3103 when VC#7 is deleted from the members of VCG.

As shown in Fig. 6, when VC#7 which presents the largest propagation delay time is deleted from the members of VCG, the phase difference becomes smaller between the respective VC paths. In this event, VCAT/LCAS reception unit 3104 outputs data to GFP reception unit 3102 in bursts in order to increase the output data rate of VC buffer unit 3103 while maintaining the input data rate for VC buffer unit 3103.

Next, a detailed description will be given of the input data rate and output data rate of MAC generation unit 3101, buffer unit 3100, VCAT/LCAS reception unit 3104, and VC buffer unit 3103 shown in Fig. 4.

Assume herein that the data rate of SDH/SONET transmission path 55 is set to, for example, 2.48832 Gbps of STM (Synchronous Transport Module) -16 which multiplexes 16 transmission paths, and is set to the data rate of Ethernet transmission path 51 to 1 Gbps of GBE (Giga Bit Ethernet).

In this event, the input data rate of MAC generation unit 3101 and buffer unit 3100 is 2.48832 Gbps which is the same as the data rate of SDH/SONET, and the output data rate is 1 Gbps which is the same as that of GBE.

The input data rate and output data rate of VCAT/LCAS reception unit 3104 and VC buffer unit 3103 are the sum of the data rates of VC paths which belong to VCG.

Accordingly, when seven VC paths of VC-4 belong to VCG, for example, the input data rate of VCAT/LCAS reception unit 3104 and VC buffer unit 3103 is calculated to be 1.04832 Gbps (=149.76 Mbps x 7), because the data rate of VC-4 is 149.76 Mbps.

The output data rate of VCAT/LCAS reception unit 3104 and VC buffer unit 3103 should be 2.48832 Gbps, which is the same as the data rate of SDH/SONET, but is set to 1.04832 Gbps because the output data rate is generally matched with the input data rate.

On the other hand, when VCAT/LCAS reception unit 3104 outputs data in bursts, the output data rate of VCAT/LCAS reception unit 3104 and VC buffer unit 3103 increases from the aforementioned 1.04832 Gbps to a maximum output data rate of 2.48832 Gbps. For this reason, when a VC path is deleted from members of VCG, buffer unit 3100 receives data at a higher data rate than usual from VC buffer unit 3103 through VCAT/LCAS reception unit 3104.

Next, a description will be given of the amount of data stored in buffer unit 3100 when a VC path is deleted from members of VCG while MAC frames are being received at the maximum data rate.

When transmitter 4 opposing transmitter 3 receives 64-byte MAC frames from packet device 2 at the maximum data rate, packet device 2 transmits the 64-byte MAC frames to transmitter 4 such that IFG (Inter frame gap) is equal to or more than 12 bytes. Here, assuming that IFG is 20 bytes, the data rate of the MAC frames transmitted from packet device 2 is calculated to be 761.905 Mbps (≈ 1 Gbps x 64 byte / (64 bytes + 20 bytes)).

Transmitter 4 adds an 8-byte GFP header to the 64-byte MAC frame for encapsulation to generate a GFP frame. As such, the data rate of the GFP frames is 857.143 Mbps (= 761.905 Mbps x (8 bytes + 64 bytes) / 64 bytes).

The GFP frame is mapped to a payload of a VC path frame of seven VC paths which belong to VCG. Here, within the data rate (= 1048.32 Mbps) of the VC path frame of the VC paths belonging to VCG, the GFP frame is mapped to 857.143 Mbps, and an idle frame is mapped to the remaining 191.18 Mbps.

As described above, transmitter 3 comprises the same configuration and the same functions as transmitter 4. Therefore, in transmitter 3, the data rate of VC path frames transmitted from transmitter 4 is also 1048.32 Mbps, where the GFP frame is mapped to 857.143 Mbps, and the idle frame is mapped to the remaining 191.18 Mbps.

With 44.928 Mbits of VC path frames stored in VC buffer unit 3103 of transmitter 3, if VC path #7, which presents the largest propagation delay time is deleted from the members of VCG, the data amount of the GFP frames output from VC buffer unit 3103 is calculated to be 36.734 Mbits (= 44.92 Mbits x 857.143 Mbps / 1048.32 Mbps). Also, the data amount of MAC frames is calculated to be 32.653 Mbits (= 36.734 Mbits x 64 bytes / 72 bytes). In other words, when the data rate of SDH/SONET is 2.48832 Gbps, buffer unit 3100 stores 32.653 Mbits of MAC frames.

Since the output data rate of buffer unit 3100 is 1 Gbps, the output data rate is 761.905 Mbps when the 64-byte MAC frames are output. In this event, buffer unit 3100 maximally stores 22.655 Mbits of data ((2.48832 Gbps - 761.905 Mbps) x 32.653 Mbits / 2.48832 Gbps).

In consideration of the difference in the path length of SDH/SONET transmission path 55, VC buffer unit 3103 stores VC path frames required to absorb the phase difference thereof, and a large memory capacity is generally used.

On the other hand, buffer unit 3100 is only used for adjusting the data rate when SDH/SONET transmission path 55 is switched to Ethernet transmission path 51. Thus, a small memory capacity is generally used for buffer unit 3100 because a small data amount of MAC frames is stored therein.

However, supposing that a small memory capacity is used for buffer unit 3100, if VCAT/LCAS reception unit 3104 outputs data in bursts when a VC path with a larger propagation delay time is deleted from members of VCG, buffer unit 3100 will be vulnerable to overflow. In this event, data will be lost, and therefore data transmission cannot be continued.

For this reason, the data transmission system of the background art is required to use a large memory capacity for buffer unit 3100 to enable dynamic changes in data rate, performed by the LCAS function, without losing data.

### SUMMARY

Accordingly, one embodiment of the present invention provides a transmission system, a transmitter, and a transmission control method which are capable of continuing data transmission without losing data even without using large memory capacity.

In order to attain the above, an exemplary aspect of the invention is a data transmission system for transmitting/receiving data using a path group having a plurality of virtually coupled paths for use in transmission of data. The data transmission system includes:
a first transmitter for transmitting input data through a plurality of paths belonging to the path group; and
a second transmitter for receiving the data transmitted from the first transmitter through the plurality of paths, temporarily storing an amount of the data corresponding to a phase difference between the plurality of paths in a first buffer to absorb the phase difference, and outputting the data, the phase difference of which has been absorbed, through a second buffer,
wherein when a path is deleted from the path group, the first transmitter reduces the data rate for data transmitted to the second transmitter, and then deletes the path from the path group.

A transmitter of one embodiment is a transmitter for transmitting/receiving data to/from an opposing transmitter using a path group having a plurality of virtually coupled paths for use in transmission of data.
The transmitter includes:
a transmission unit for transmitting input data to the opposing transmitter through a plurality of paths belonging to the path group; and
a reception unit for receiving data from the opposing transmitter through the plurality of paths, temporarily storing an amount of the data corresponding to a phase difference among the respective paths in a first buffer to adjust the phase difference, and outputting the data read from the first buffer through a second buffer, wherein when a path is deleted from the path group, the reception unit reduces the data rate for data transmitted from the transmitter to the opposing transmitter, and then deletes the path from the path group.

A data transmission control method of one embodiment is a data transmission control method for transmitting/receiving data between a first transmitter and a second transmitter using a path group having a plurality of virtually coupled paths for use in the transmission of data,
wherein when a path is deleted from the path group, a data rate is reduced for data transmitted from the first transmitter to the second transmitter, and then the path is deleted from the path group.

The above and other features, and advantages of the present invention will become apparent from the following description with reference to the accompanying drawings, which illustrate examples of the present invention.

### BRIEF DESCRIPTION OF THE DRAWINGS

Fig. 1 is a block diagram showing the configuration of a data transmission system of the background art;
Fig. 2 is a block diagram showing the configuration of a transmitter shown in Fig. 1;
Fig. 3 is a block diagram showing the configuration of a transmission unit of the background art, shown in Fig. 1;
Fig. 4 is a block diagram showing the configuration of a reception unit of the background art, shown in Fig. 1;
Fig. 5 is a schematic diagram showing how VC path frames are stored in the VC buffer unit shown in Fig. 4;
Fig. 6 is a schematic diagram showing how VC path frames are stored in the VC buffer unit shown in Fig. 4 when a VC path is deleted from VCG;
Fig. 7 is a block diagram showing an exemplary configuration of a data transmission system according to a first exemplary embodiment;
Fig. 8 is a block diagram showing in greater detail the exemplary configuration of the data transmission system according to the first exemplary embodiment;
Fig. 9 is a block diagram showing an exemplary configuration of a transmitter shown in Fig. 7;
Fig. 10 is a block diagram showing an exemplary configuration of a transmission unit shown in Fig. 9;
Fig. 11 is a block diagram showing an exemplary configuration of a reception unit shown in Fig. 9;
Fig. 12 is a schematic diagram showing how VC path frames are stored in a VC buffer unit shown in Fig. 11;
Fig. 13 is a schematic diagram showing how VC path frames are stored in the VC buffer unit shown in Fig. 11 when a VC path is deleted from VCG;
Fig. 14 is a sequence diagram showing the operation of the data transmission system according to the first exemplary embodiment;
Fig. 15 is a schematic diagram showing an exemplary configuration of CMF used in the data transmission system according to the first exemplary embodiment;
Fig. 16 is a sequence diagram showing the operation of a data transmission system according to a second exemplary embodiment; and
Fig. 17 is a sequence diagram showing the operation of a data transmission system according to a third exemplary embodiment.

### EXEMPLARY EMBODIMENT

Next, the present invention will be described with reference to the drawings.

### (First Exemplary Embodiment)

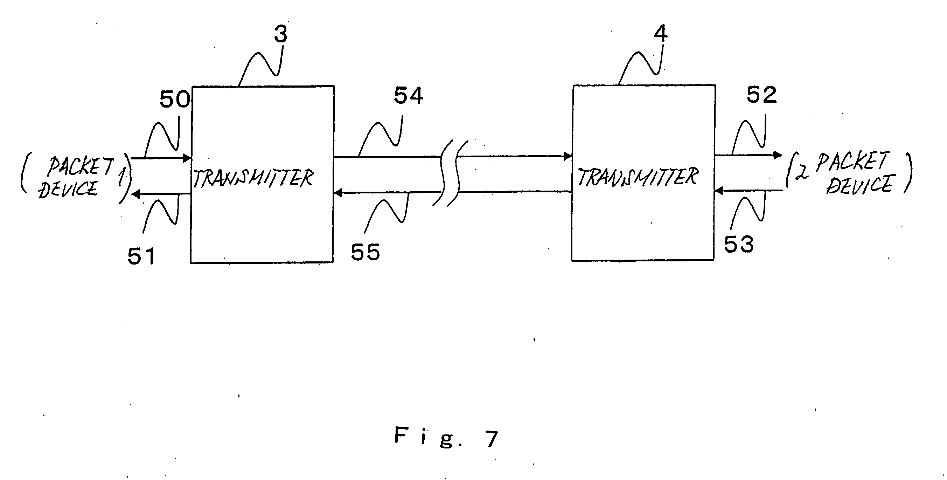

Fig. 7 is a block diagram showing an exemplary configuration of a data transmission system according to a first exemplary embodiment.

As shown in Fig. 7, the data transmission system of the first exemplary embodiment comprises transmitters 3, 4.

Transmitter (first transmitter) 3 is connected to packet device 1 (not shown), which is a data device, through Ethernet transmission paths 50, 51. Transmitter 3 is also connected to transmitter 4 (second transmitter) through SDH/SONET transmission paths 54, 55. Transmitter 4 is connected to packet device 2 (not shown), which is a data device, through Ethernet transmission paths 52, 53.

Transmitters 3, 4 are devices for transmitting data in MAC frames transmitted from packet devices 1, 2 using SDH/SONET frames. Transmitters 3, 4 comprise the aforementioned GFP function defined by G.7041 based on ITU-T Recommendation. Transmitters 3, 4 map data in MAC frames transmitted from packet device 1, 2 to SDH/SONET frames using the GFP function, and transmit the SDH/SONET frames to opposing transmitters 4, 3 through SDH/SONET transmission paths 54, 55. Upon receipt of an SDH/SONET frame from opposing transmitters 4, 3, transmitters 3, 4 extract data of an MAC frame from the SDH/SONET frame, and transmit the extracted MAC frame to packet devices 1, 2 through Ethernet transmission paths 51, 52. Transmitters 3, 4 also comprise the aforementioned VCAT function defined by G.707 based on ITU-T Recommendation, and the LCAS function defined by G-7042 based on ITU-T Recommendation.

Transmitter 3 of this exemplary embodiment divides data received from packet device 1 into a plurality of VC paths which belong to VCG (path group) for transmission.

Upon receipt of data from transmitter 3 through a plurality of VC paths, transmitter 4 of this exemplary embodiment temporarily stores an amount of data according to the phase difference of each VC path in a VC buffer unit (first buffer), thereby absorbing the phase difference of each VC path, and transmits the data to packet device 2 through a buffer unit (second buffer).

Also, when a VC path is deleted from VCG, transmitter 3 deletes the VC path from members of VCG after it has reduced the data rate at which data is transmitted to transmitter 4. Thus, in this exemplary embodiment, when data is transmitted from transmitter 3 to transmitter 4, the path is deleted from VCG after the data rate from the packet device has been reduced to reduce the amount of data stored in the first buffer.

Since transmitter 3 stores an amount of data according to the phase difference of each VC path belonging to the same VCG in the first buffer, the deletion of a VC path with a large delay from VCG results in a reduction in the amount of data stored in the first buffer, causing data to flow in bursts from the first buffer to the second buffer. In this exemplary embodiment, the VC path is deleted from the VCG after the data rate from the packet device has been reduced to reduce the amount of data stored in the first buffer. Accordingly, a reduced amount of data flows into the second buffer, so that the data transmission can be continued without losing data even if a large memory capacity is not used for the second buffer.

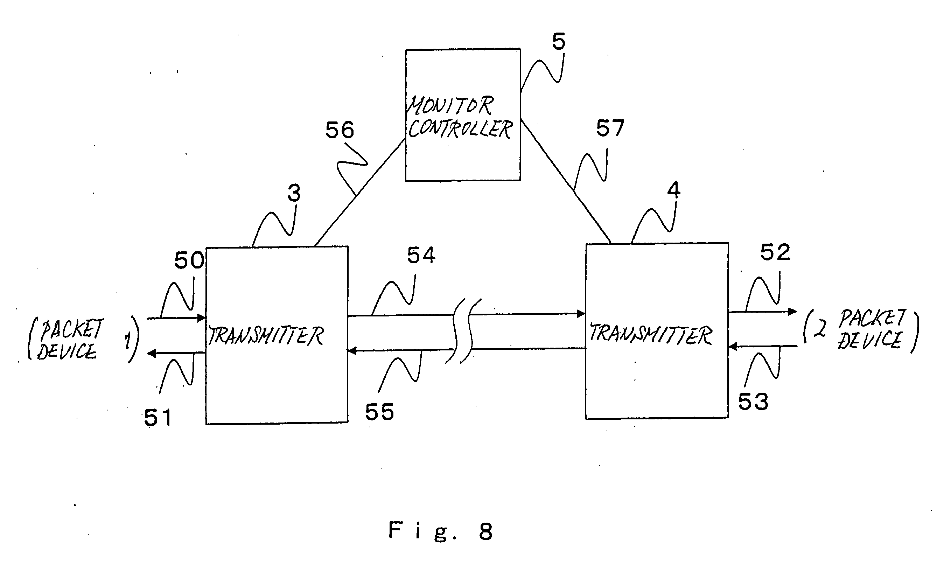

As shown in Fig. 8, the data transmission system of the first exemplary embodiment further comprises monitor controller 5. Monitor controller 5 is connected to transmitter 3 through line 56 such as the Internet, and connected to transmitter 4 through line 57.

Monitor controller 5 monitors the operation of transmitters 3, 4, and controls the operation of transmitters 3, 4 in response to a request from an operator. For example, when a VC path which passes through an arbitrary transmitter is switched to a VC path which passes through another transmitter in order to exchange the arbitrary transmitter, the operator requests monitor controller 5 to delete the VC path which passes through the exchanged transmitter.

On the other hand, when a user of the data transmission system is to reduce an available data rate in association with the alteration of contract with the user, the operator requests monitor controller 5 to delete some VC path from a plurality of VC paths. When monitor controller 5 is requested by the operator to delete a VC path, monitor controller 5 transmits a path deletion request to transmitter 3 to instruct deletion of the VC path.

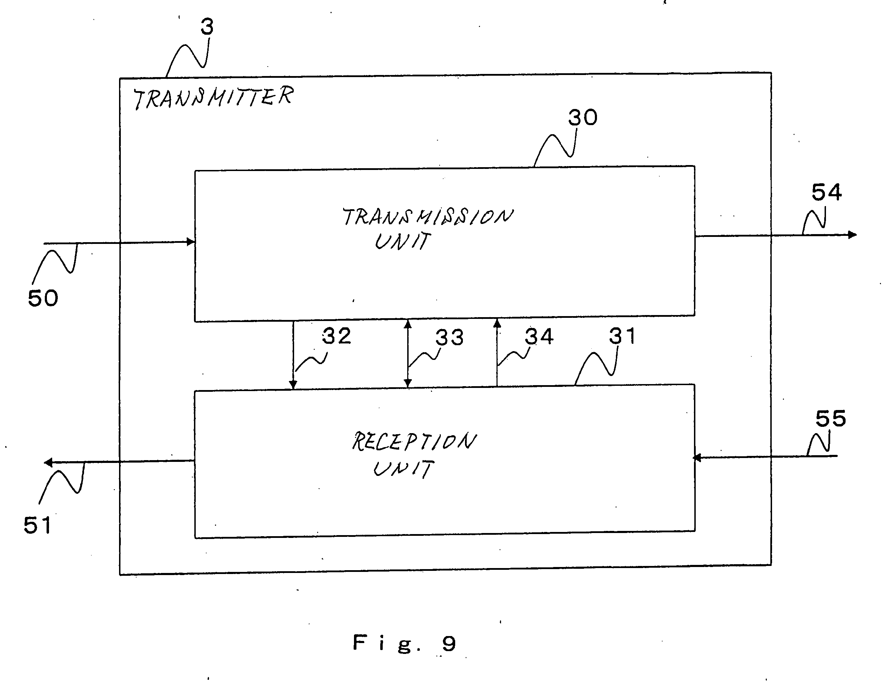

Fig. 9 is a block diagram showing an exemplary configuration of the transmitter shown in Fig. 7. While Fig.9 shows an exemplary configuration of transmitter 3, transmitter 4 is also similar in configuration.

As shown in Fig. 9, transmitter 3 comprises transmission unit 30 for transmitting SDH/SONET frames to transmitter 4 (not shown) through SDH/SONET transmission path 54, and comprises reception unit 31 for receiving SDH/SONET frames transmitted from transmitter 4 through SDH/SONET transmission path 54. Transmission unit 30 and reception unit 31 are connected through control lines 32, 33, 34.

First, a description will be given of the operation of transmission unit 30 shown in Fig. 9.

Upon receipt of a MAC frame from packet device 1 (not shown) through Ethernet transmission path 50, transmission unit 30 maps the MAC frame to an SDH/SONET frame, and transmits the SDH/SONET frame to transmitter 4 (not shown) through SDH/SONET transmission path 54.

Also, upon receipt of a path deletion request from monitor controller 5 (not shown), transmission unit 30 stores the number of a VC path to be deleted in CMF (Client Management Frame) which is then transmitted to transmitter 4, and requests transmitter 4 to calculate the amount of data transmitted in bursts within transmitter 4 after the VC path has been deleted (hereinafter called the "burst data amount").

While transmitter 4 stores data in the buffer in order to reduce the phase difference among respective VC paths, if a VC path with a large delay is deleted, the phase difference is reduced among the remaining VC paths, causing a smaller amount of data to be stored in the buffer. Thus, the amount of data corresponding to this reduction is output in bursts from the buffer. The amount of data output in bursts in this event is the burst data amount.

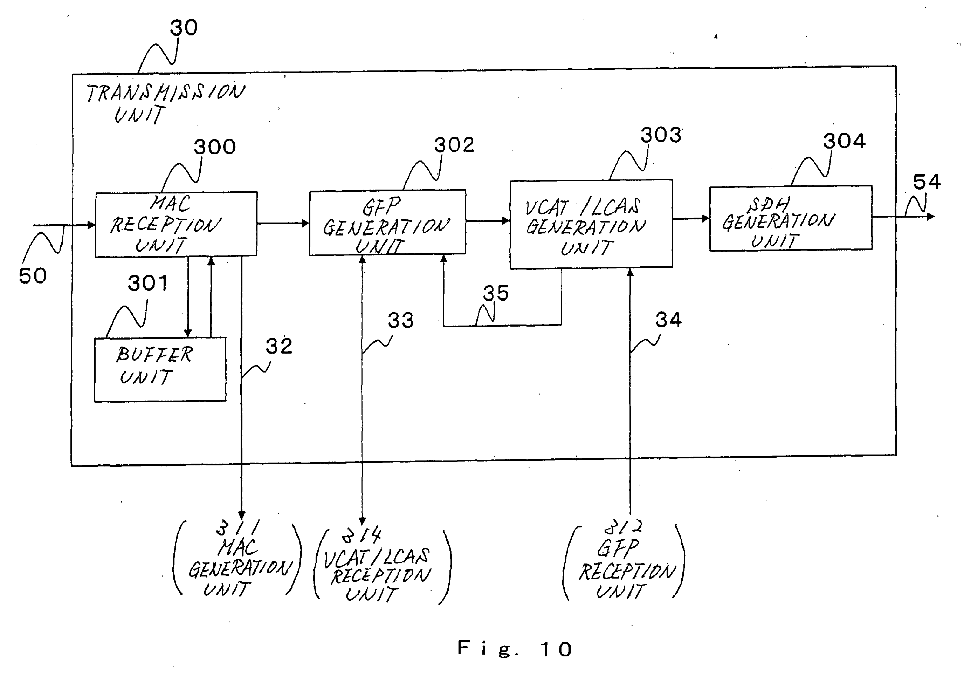

The configuration of transmission unit 30 shown in Fig. 9 will be described in detail with reference to Fig. 10.

As shown in Fig. 10, transmission unit 30 comprises MAC reception unit 300, buffer unit 301, GFP generation unit 302, VCAT/LCAS generation unit 303, and SDH generation unit 304.

Ethernet transmission path 50 is connected to MAC reception unit 300, while SDH/SONET transmission path 54 is connected to SDH generation unit 304.

MAC reception unit 300 is connected to buffer unit 301 and GFP generation unit 302. GFP generation unit 302 is connected to VCAT/LCAS generation unit 303, while VCAT/LCAS generation unit 303 is connected to SDH generation unit 304.

Upon receipt of a MAC frame from packet device 1 (not shown) through Ethernet transmission path 50, MAC reception unit 300 removes a header including SFD and Preamble, added to the MAC frame, and stores the MAC header removed frame in buffer unit 301.

MAC reception unit 300 reads MAC header removed frames stored in buffer unit 301 at a data rate of SDH/SONET transmission path 54, and outputs the read frames to GFP generation unit 302 to convert the data rate of the MAC header removed frames from the data rate of Ethernet transmission path 50 to the data rate of SDH/SONET frames.

Further, MAC reception unit 300 of this exemplary embodiment requests reception unit 31 to reduce the data rate of MAC frames transmitted from packet device 1.

Upon receipt of a MAC frame from packet device 1, MAC reception unit 300 outputs a control signal to MAC generation unit 311 (not shown) of reception unit 31 for reducing the data rate of the MAC frames transmitted from packet device 1 through control line 32.

Upon receipt of the MAC header removed frame from MAC reception unit 300, GFP generation unit 302 adds a GFP header to the MAC header removed frame, and encapsulates them into a GFP frame. The resulting GFP frame is output to VCAT/LCAS generation unit 303.

Further, GFP generation unit 302 of this exemplary embodiment requests transmitter 4 to calculate the burst data amount. Upon receipt of the number of a VC path to be deleted from VCAT/LCAS generation unit 303 through control line 35, GFP generation unit 302 stores the number of the VC path in CMF, transmits the CMF to transmitter 4, and requests transmitter 4 to calculate the burst data amount.

Upon receipt of the GFP frame from GFP generation unit 302, VCAT/LCAS generation unit 303 allocates the GFP frame to any VCG, maps the GFP frame to a payload of a VC path frame of the allocated VCG, and outputs the VC path frame to SDH generation unit 304.

Further, upon receipt of a path deletion request from monitor controller 5, VCAT/LCAS generation unit 303 of this exemplary embodiment outputs the number of the VC path to be deleted to GFP generation unit 302 through control line 35. Also, upon receipt of a control signal for instructing deletion of a VC path from GFP reception unit 312 through control line 34, VCAT/LCAS generation unit 303 starts deleting the specified VC path.

The time at which VCAT/LCAS generation unit 303 starts the deletion of the VC path is that time at which it receives the control signal from GFP reception unit 312 through control line 34. This time is the same as the time at which transmitter 3 transmits data to transmitter 4 through SDH/SONET transmission path 54 at a limited data rate.

Upon receipt of the VC path frame from VCAT/LCAS generation unit 303, SDH generation unit 304 maps the VC path frame to a payload of an SDH/SONET frame, and transmits the SDH/SONET frame to opposing transmitter 4 (not shown) through SDH/SONET transmission path 54.

Next, a description will be given of the operation of reception unit 31 shown in Fig. 9.

Upon receipt of an SDH/SONET frame from transmitter 4 through SDH/SONET transmission path 55, reception unit 31 extracts a MAC frame from the SDH/SONET frame, and transmits the extracted MAC frame to packet device 1 through Ethernet transmission path 51.

Reception unit 31 also comprises a function of calculating the aforementioned burst data amount. Shown herein is exemplary operations when the reception unit (not shown) of transmitter 4 receives CMF transmitted from transmission unit 30 of transmitter 3, and the reception unit of transmitter 4 calculates the burst data amount.

Upon receipt of the CMF from transmitter 3, the reception unit of transmitter 4 calculates the burst data amount based on the number of a VC path stored in the CMF, and the amount of data stored in its own buffer unit (not shown).

Assume, for example, that VC paths VC#1 - VC#7 belong to VCG, then in that case VC#7 presents the largest delay propagation time, and VC#1 presents the second largest delay propagation time. In this event, when VC#7 is deleted, the phase differences among the VC paths will be reduced, and the phases of VC#2 - VC#6 may be matched with the phase of VC#1, resulting in a reduction in the amount of data stored in the VC buffer unit by transmitter 4.

The reception unit of transmitter 4 calculates data amounts of VC#1 to VC#6, respectively, stored in the VC buffer unit before the deletion of VC#7, and sums up the calculated data amounts. Then, the reception unit of transmitter 4 stores the summed data amount in the CMF as the burst data amount, and instructs the transmission unit (not shown) of transmitter 4 to transmit the CMF to transmitter 3. The transmission unit of transmitter 4 transmits the CMF which stores the burst data amount to transmitter 3 in accordance with the instructions from the reception unit.

Upon receipt of the CMF from transmitter 4, reception unit 31 of transmitter 3 reduces the data rate of MAC frames transmitted from packet device 1 based on the burst data amount stored in the CMF.

Reception unit 31 determines the amount of reduction in the data rate of MAC frames transmitted from packet device 1 such that the buffer unit will not overflow even if data stored in the VC buffer unit of transmitter 4 flows into the buffer unit (not shown) of transmitter 4 in bursts. In this way, the buffer unit of transmitter 4 can be securely prevented from overflowing by determining the amount of reduction in the data rate based on the amount of data which is actually output in bursts.

Also, after completely outputting data stored in the VC buffer of transmitter 4, reception unit 31 releases the limitation (reduction) to the data rate of transmission from packet device 1 at a timing at which data can be stored at the original data rate. By releasing the limitation to the data rate, packet device 1 can transmit MAC data at the original data rate.

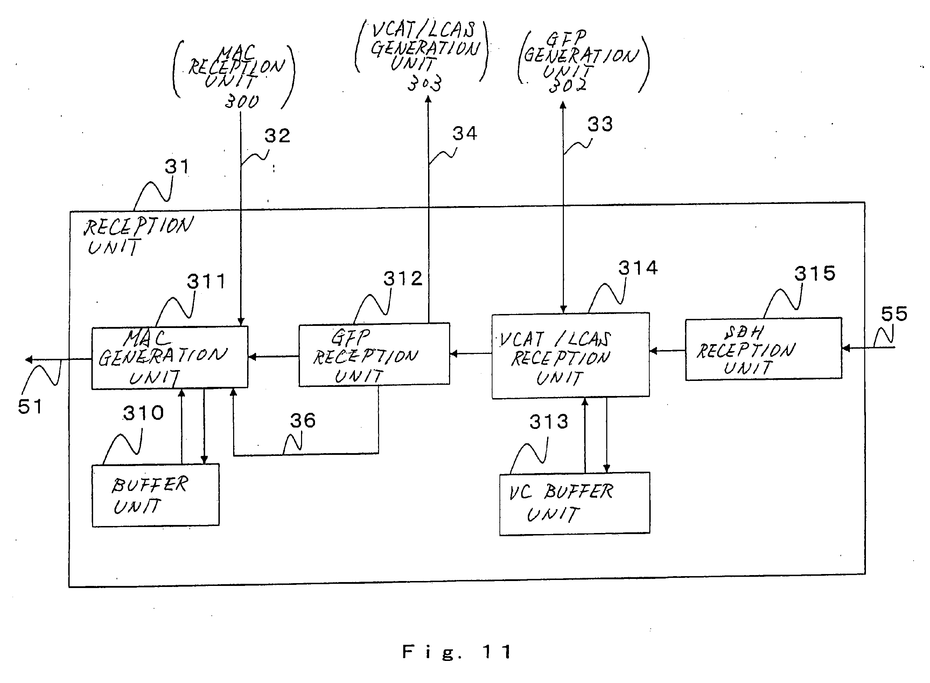

Now, the configuration of reception unit 31 will be described in detail with reference to Fig. 11.

As shown in Fig. 11, reception unit 31 comprises SDH reception unit 315, VCAT/LCAS reception unit 314, VC buffer unit 313, GFP reception unit 312, MAC generation unit 311, and buffer unit 310.

MAC generation unit 311 is connected to Ethernet transmission path 51, while SDH reception unit 315 is connected to SDH/SONET transmission path 55.

MAC generation unit 311 is connected to buffer unit 310 and GFP reception unit 312. GFP reception unit 312 is connected to VCAT/LCAS reception unit 314, while VCAT/LCAS reception unit 314 is connected to VC buffer unit 313.

Upon receipt of an SDH/SONET frame from transmitter 4 (not shown) through SDH/SONET transmission path 55, SDH reception unit 315 terminates the SDH/SONET frame, and thus extracts a VC path frame from its payload, and outputs the extracted VC path frame to VCAT/LCAS reception unit 314.

Upon receipt of the VC path frame from SDH reception unit 315, VCAT/LCAS reception unit 314 classifies the VC path frame in accordance with VCG. VCAT/LCAS reception unit 314 stores VC path frames of a VC path which presents a small propagation delay in VC buffer unit 313, thereby absorbing a phase difference of each VC path which belongs to the same VCG. VCAT/LCAS reception unit 314 terminates the VC path frame, and thus extracts a GFP frame and an idle frame from its payload, and outputs the extracted GFP frame and idle frame to GFP reception unit 312.

Upon receipt of the GFP frame and idle frame from VCAT/LCAS reception unit 314, GFP reception unit 312 discards the idle frame, removes the GFP header from the GFP frame to extract a MAC header removed frame, and outputs the extracted MAC header removed frame to MAC generation unit 311.

Further, GFP reception unit 312 of this exemplary embodiment comprises a function of returning the data rate during data transmission of packet device 1 (not shown) to the original data rate.

GFP reception unit 312 holds, for example, information indicative of a time at which the deletion of a VC path is started (hereinafter called the "start time"), and the time at which the limitation to the data rate is released (hereinafter called the "rate limitation time).

The start time may be set to the same time as the round-trip propagation delay time between packet device 1 and transmitter 3, or a time longer than the round-trip propagation delay time. When the start time is set to the same time as the round-trip propagation delay time, data transmission is started at a limited data rate from transmitter 3 to transmitter 4 at the same time as the start of the deletion of the VC path, and the data is stored in the VC buffer of transmitter 4. This start time may be set arbitrarily by the user.

The rate limitation time may be a time which satisfies conditions under which transmitter 4 has completely output data in bursts when transmitter 3 receives MAC data from packet device 1 at the original data rate. This rate limitation time may be set arbitrarily by the user.

In this exemplary embodiment, the rate limitation time is calculated by subtracting the round-trip propagation delay time between packet device 1 and transmitter 3 from the sum of the round-trip propagation delay time between transmitter 3 and transmitter 4 and a time required to output burst data from VC buffer unit 313.

The round-trip propagation delay time between transmitter 3 and transmitter 4 is calculated from the difference between the time at which a signal is transmitted from transmitter 3 to transmitter 4 and the time at which transmitter 3 receives a response signal to that signal from transmitter 4.

The time required to output the burst data is calculated from the burst data amount notified from transmitter 4 and the maximum output data rate of VC buffer unit 313.

The round-trip propagation delay time between packet device 1 and transmitter 3 is calculated from the standard of an interface between packet device 1 and transmitter 3. For example, when the interface between packet device 1 and transmitter 3 is 1000 BASE-SX as defined by IEEE802.3, the maximum transmittable distance is 550 meters, and the transmission speed is approximately 5 ns/m. In this event, the propagation delay time between packet device 1 and transmitter 3 is 2.75 usec. Also, the round-trip propagation delay time between packet device 1 and transmitter 3 at the maximum transmittable distance is 5.5 usec.

Upon receipt of CMF from transmitter 4, GFP reception unit 312 extract the burst data amount stored in the CMF, transmits the value of the burst data amount to MAC generation unit 311 through control line 36, and starts a deletion timer for measuring the start time.

When the deletion timer reaches the start time, the transmission of SDH/SONET frames is started from transmitter 3 to transmitter 4 while limiting the data rate on payloads, so that GFP reception unit 312 outputs a control signal for deleting a VC path from members of VCG to VCAT/LCAS generation unit 303 through control line 34. GFP reception unit 312 starts a rate control timer for measuring the rate limitation time simultaneously with the output of the control signal to VCAT/LCAS generation unit 303.

When the rate control timer reaches the rate limitation time, GFP receiver unit 312 outputs a control signal for instructing MAC generation unit 311 to release the limitation to the data rate through control line 36, forcing MAC generation unit 311 to release the limitation to the data rate. Accordingly, since the limitation to the data rate is released at the same time as the completed output of burst data from the VC buffer unit of transmitter 4, data can be stored in the VC buffer unit of transmitter 4 without lime loss, and transmitted to packet device 2.

Upon receipt of the MAC header removed frame from GFP reception unit 312, MAC generation unit 311 adds a header including SFD and Preamble to the MAC header removed frame to generate a MAC frame.

MAC generation unit 311 stores the generated MAC frame in buffer unit 310, reads the MAC frame from buffer unit 310 at the data rate of Ethernet transmission path 51 for transmission to packet device 1 through Ethernet transmission path 51. By executing such processing, the data rate of SDH/SONET frames on SDH/SONET transmission path 55 is converted to the data rate of Ethernet transmission path 51.

Further, MAC generation unit 311 of this exemplary embodiment controls the data rate of MAC frames transmitted from packet device 1. Specifically, MAC generation unit 311, upon determining a new data rate, instructs packet device 1 to transmit data at this data rate.

Upon receipt of a burst data amount from GFP reception unit 312 through control line 36, MAC generation unit 311 calculates the data rate of MAC frames, which are to be transmitted to packet device 1, from the memory capacity of buffer unit 310, a maximum output data rate in VC buffer unit 313, and the value of the received burst data amount.

MAC generation unit 311 finds the transmission stop time, at which the transmission of MAC frames to packet device 1 is stopped, based on the calculated data rate, and stores the found transmission stop time in the Time field of a Pause frame, which is then transmitted to packet device 1.

The Pause frame is a frame used to force packet device 1 to stop the transmission of MAC frames. The Time field is a field comprised, for example, of information of two octets indicative of 0 to 65535 seconds, for storing the aforementioned transmission stop time.

The data rate of MAC frames transmitted from packet device 1 is controlled by the ratio of a time period during which MAC frames are being transmitted from packet device 1 to a time period during which the transmission is stopped. The data rate becomes lower as the ratio of the stop time period to the transmission time period becomes larger.

Also, upon receipt of a control signal for instructing the transmission of a Pause frame from MAC reception unit 300 through control line 32, MAC generation unit 311 transmits a Pause frame, which has stored the transmission stop time in the Time field, to packet device 1.

Upon receipt of the Pause frame from MAC generation unit 311, packet device 1 limits the data rate by controlling the ratio of the MAC frame transmission time period to the stop time period in accordance with the transmission stop time stored in the Time field.

After the lapse of the transmission stop time, as a MAC frame is transmitted from packet device 1 to transmitter 3, transmitter 3 transmits the received MAC frame to transmitter 4 using an SDH/SONET frame, and transmits the Pause frame to packet device 1.

Also, upon receipt of a control signal for instructing the release of the limitation to the data rate from GFP reception unit 312 through control unit 36, MAC generation unit 311 transmits a Pause release frame, which has stored the value "0x0000" indicative of zero seconds in the Time field of the Pause frame as the transmission stop time, to packet device 1. Subsequently, packet device 1 transmits MAC frames at the normal data rate.

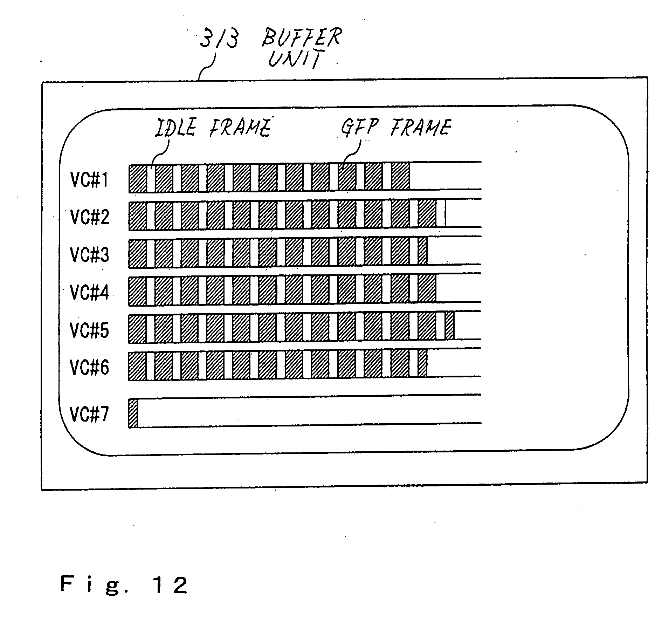

Fig. 12 is a diagram showing how VC path frames are stored in VC buffer unit 313.

The time required to start and complete deletion of a VC path is equal to the round-trip propagation delay time between transmitter 3 and transmitter 4. Also, the time taken to fill VC buffer unit 313 with VC path frames transmitted at the limited data rate is shorter than the round-trip propagation delay time between transmitter 3 and transmitter 4. Accordingly, at the time that the deletion of the VC path from members of VCG is completed, VC buffer unit 313 should have been filled with VC path frames even if the data rate is limited.

When the data rate is limited for MAC frames transmitted from packet device 1, a reduced data amount of GFP frames is mapped to payloads of VC path frames. As the data amount of a GFP frame is reduced, the capacity of an empty region increases in the payload of the VC path frame, so that the increased data amount of idle frames is mapped to the empty region (see Fig. 12).

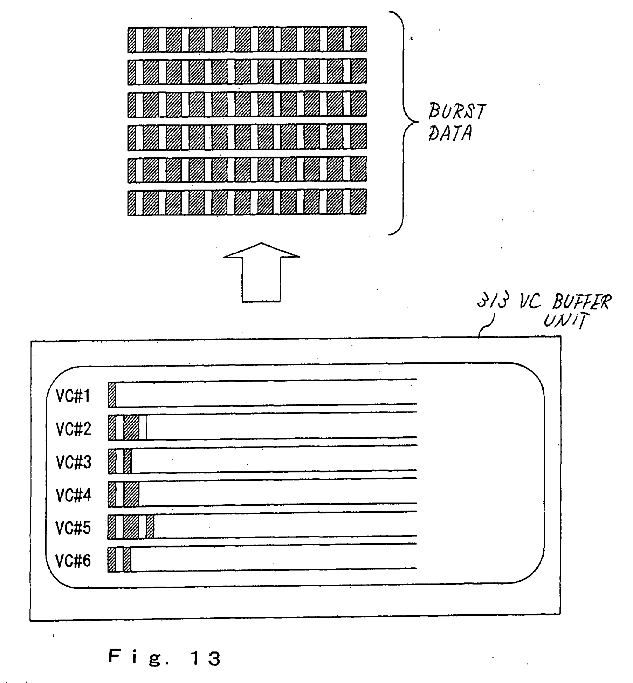

Here, if VC#7 which presents the largest propagation delay time is deleted from the members of VCG, the phase difference of each of the remaining VC path frames is reduced, resulting in a reduction in the data amount of VC path frames stored in VC buffer unit 313. Consequently, the amount of burst data corresponding to the reduction is output from VC buffer 313 to GFP reception unit 312 (see Fig. 13).

Upon receipt of burst data, GFP reception unit 312 discards idle frames included in the burst data, and stores MAC frames generated by MAC generation unit 311 in buffer unit 310.

According to the data transmission system of the first exemplary embodiment, since a reduced data amount of MAC frames is stored in buffer unit 310 even if a VC path is deleted from members of VCG, data transmission can be continued without losing MAC frames even if a small memory capacity is used for buffer unit 310.

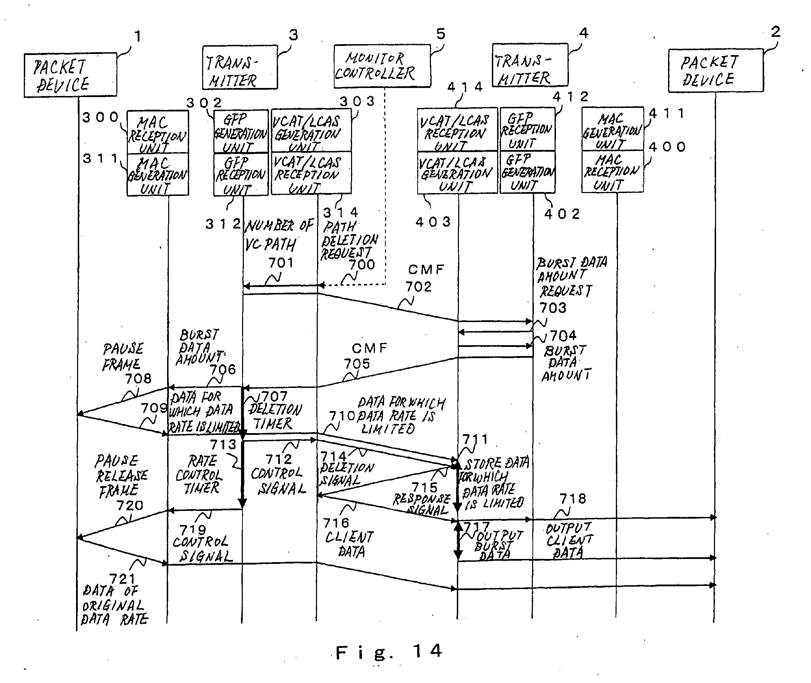

Fig. 14 is a sequence diagram showing the operation of the data transmission system according to the first exemplary embodiment.

As shown in Fig. 14, when the operator gives instructions for a path deletion request, monitor controller 5 transmits the path deletion request to transmitter 3 (step 700). Upon receipt of the path deletion request from monitor controller 5, transmitter 3 outputs the number of a VC path to be deleted to GFP generation unit 302 through VCAT/LCAS generation unit 303 (step 701). Upon receipt of the number of the VC path from VCAT/LCAS generation unit 303, GFP generation unit 302 stores the number of the VC path in CMF which is then transmitted to transmitter 4 (step 702).

Upon receipt of the CMF from transmitter 3, transmitter 4 recognizes the VC path to be deleted based on the number of the VC path stored in the CMF, and requests VCAT/LCAS reception unit 414 to calculate the burst data amount by GFP reception unit 412 (step 703).

VCAT/LCAS reception unit 414, when requested to calculate the burst data amount from GFP reception unit 412, calculates the burst data amount based on the amount of data stored in the VC buffer unit (not shown) connected thereto, and the number of the VC path to be deleted, and outputs the value of the calculated burst data amount to GFP generation unit 402 (step 704).

Upon receipt of the value of the burst data amount from VCAT/LCAS reception unit 414, GFP generation unit 402 stores the value of the burst data amount in CMF which is then transmitted to transmitter 3 (step 705).

Upon receipt of the CMF from transmitter 4, GFP reception unit 312 of transmitter 3 outputs the value of the burst data amount of transmitter 4 stored in the CMF to MAC generation unit 311 (step 706), and starts the deletion timer (step 707).

Upon receipt of the value of the burst data amount from GFP reception unit 312, MAC generation unit 311 calculates the data rate of MAC frames transmitted from packet device 1, and finds a transmission stop time based on the calculated data rate. MAC generation unit 311 stores the found transmission stop time in the Time field of the Pause frame, which is then transmitted to packet device 1 (step 708).

Upon receipt of the Pause frame from MAC generation unit 311, packet device 1 increases the ratio of the stop time period to the transmission time period in accordance with the transmission stop time stored in the Time field to transmit MAC data to transmitter 3 while limiting the data rate (step 709).

Upon receipt of the MAC data from packet device 1, transmitter 3 converts its data rate to the data rate of SDH/SONET transmission path 54, and transmits the MAC data to transmitter 4 through SDH/SONET transmission path 54 (step 710).

Upon receipt of data (client data) from packet device 1 through transmitter 3, VCAT/LCAS reception unit 414 of transmitter 4 stores the client data in the VC buffer unit (not shown) (step 711), to absorb the phase difference of each VC path.

As the deletion timer reaches the start time, GFP reception unit 312 outputs a control signal instructing deletion of a VC path to VCAT/LCAS generation unit 303 (step 712), and starts the rate control timer (step 713).

Upon receipt of the control signal from GFP reception unit 312, VCAT/LCAS generation unit 303 deletes a specified VC path from members of VCG, and outputs a deletion signal indicating deletion of the VC path to transmitter 4 (step 714).

Upon receipt of the deletion signal from transmitter 3, VCAT/LCAS reception unit 414 of transmitter 4 transmits its response signal to transmitter 3 (step 715).

Upon receipt of the response signal from transmitter 4, VCAT/LCAS reception unit 314 of transmitter 3 outputs client data to VCAT/LCAS reception unit 414 of transmitter 4 using a VC path which belongs to VCG, other than the VC path to be deleted, through VCAT/LCAS generation unit 303 (step 716).

Upon receipt of the client data from VCAT/LCAS reception unit 314, VCAT/LCAS reception unit 414 outputs burst data stored in the VC buffer unit (not shown) (step 717).

GFP reception unit 412 discards the idle frame included in the burst data, and outputs the client data to MAC generation unit 411. The client data output from GFP reception unit 412 is stored in the buffer unit (not shown), and transmitted to packet device 2 (step 718).

As the rate control timer reaches the rate limitation time, GFP reception unit 312 of transmitter 3 transmits a control signal to MAC generation unit 311, forcing the same to output a Pause release frame to packet device 1 (step 719). Upon receipt of the control signal from GFP reception unit 312, MAC generation unit 311 transmits the Pause release frame to packet device 1 (step 720).

Upon receipt of the Pause release frame from transmitter 3, packet device 1 transmits MAC frames to packet device 2 through transmitters 3, 4 at the original data rate (step 721).

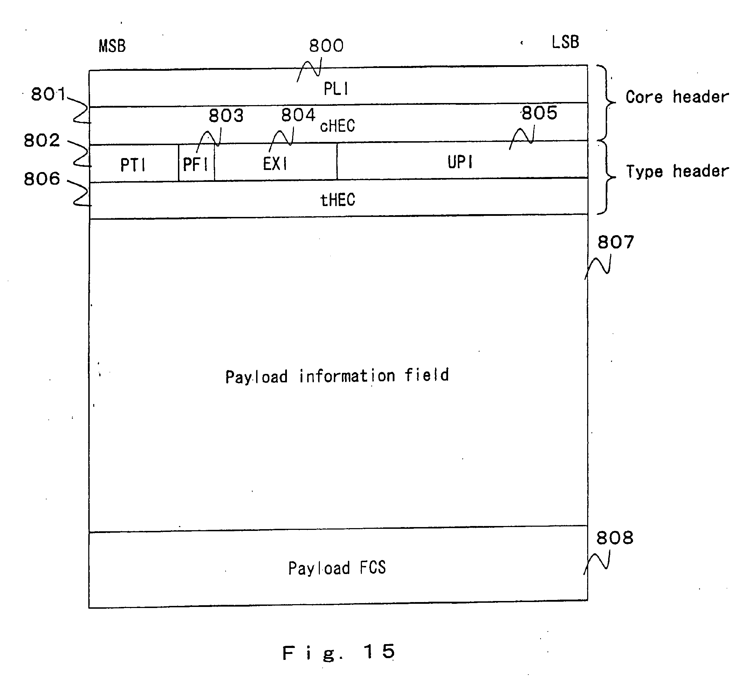

Fig. 15 is a schematic diagram showing an exemplary configuration of an SDH/SONET frame used in the data transmission system of the first exemplary embodiment.

PLI (Payload Length Indicator) 800 shown in Fig. 15 stores information indicative of the length of a GFP frame.

cHEC (Core Header Error Check) 801 stores a value resulting from processing performed on data stored in PLI 800 in accordance with CRC-16 (Cyclic Redundancy Check - 16). Upon receipt of an SDH/SONET frame, transmitters 3, 4 detect bit errors in the Core header including PLI 800 and cHEC 801, using the value stored in cHEC 801.

PTI (Payload Type Identifier) 802 stores information for identifying whether the frame is CDF (client data frame) for use in the transmission of client data or CMF for use in the transmission of management information.

PFI (Payload FCS Identifier) 803 stores information indicating whether or not FCS (Frame Check Sequence) has been added to the end of the frame.

EXI (Extension Header Identifier) 804 stores information indicating the type of GFP frame, for example, a NULL extension frame.

UPI (User Payload Identifier) 805 stores information of client data type in the case of CDF, and information of management information type in the case of CMF. The GFP scheme defines only two values, Loss of client signal (value: 0x01) and Loss of character synchronization (value: 0x02) indicating anomalous client data. In this exemplary embodiment, therefore, the values 0x01 and 0x02 are not stored in UPI in order to distinguish from the value defined in the GFP scheme in the case of CMF.

tHEC (Type Header Error Check) 806 stores a value resulting from processing that is performed on data stored in PTI 802, PFI 803, EXI 804 and UPI 805 in accordance with CRC-16. Upon receipt of an SDH/SONET frame, transmitters 3, 4 detect bit errors of a Type header including PTI 802, PFI 803, EXI 804, and UPI 805, using the value stored in tHEC 806.

Payload information field 807 stores client data in the case of CDF, and management information in the case of CMF. FOr example, the number of a VC path to be deleted, and the value of the burst data amount are stored in Payload information field 807.

Payload FCS 808 stores a value resulting from processing performed on data stored in the Type header and Payload information filed 807 in accordance with CRC-32. Upon receipt of an SDH/SONET frame, transmitters 3, 4 detect bit errors of the Type header and Payload information field 807 using the value stored in Payload FCS 808.

According to this exemplary embodiment, since the amount of data transmitted to transmitter 4 is reduced by limiting the data rate of data transmitted from packet device 1 by transmitter 3, the internal buffer equipped in transmitter 4 can be prevented from overflowing, which occurs when a VC path is deleted. Accordingly, data transmission can be continued without losing data even if a large memory capacity has not been installed.

While this exemplary embodiment has shown an example of using the number of a VC path when the VC path is deleted, a VC path to be deleted need not be limited to the method to specify by the number. In some data transmission systems, the number of a VC path assigned by transmitter 3 may be different from the number of the same VC path assigned by transmitter 4. In this event, transmitter 4 will misconstrue a VC path to be deleted and calculate an erroneous burst data amount, even if it is notified of the number of the VC path from transmitter 3. Therefore, a VC path to be deleted may be notified to the opposing transmitter using, for example, a Sequence number defined by the VCAT scheme or LCAS scheme. With the use of the Sequence number, the number of a VC path assigned by transmitter 3 can always be matched with the number of the same VC path assigned by transmitter 4. Consequently, transmitter 3 can always notify transmitter 4 of a VC path to be deleted.

In this regard, when a VC path to be deleted is notified to an opposing transmitter using the Sequence number, transmitters 3, 4 may previously keep, for example, a table or the like which indicates a Sequence number corresponding to each VC path. Upon notification of a Sequence number from opposing transmitters 3, 4, transmitters 3, 4 match the notified Sequence number with held Sequence numbers to recognize a VC path to be deleted.

Also, while this exemplary embodiment has shown an example in which transmitter 3 notifies packet device 1 of the transmission stop time such that packet device 1 limits the data rate of data transmitted to transmitter 3 in accordance with the transmission stop time, any information may be notified from transmitter 3 to packet device 1 as long as packet device 1 can limit the data rate of data transmitted to transmitter 3.

For example, transmitter 3 may instruct packet device 1 to stop transmission and start transmission. In this event, when instructed to stop transmission, packet device 1 may stop transmission of data to transmitter 3, whereas when instructed to start transmission from transmitter 3, packet device 1 may start transmission of data to transmitter 3.

Also, transmitter 3 may control the data rate of packet device 1, for example, using a Pause frame which stores information regarding a time that is sufficiently longer than the previously set transmission stop time (hereinafter called the "fixed time") in the Time field. In this event, upon calculation of the transmission stop time for packet device 1, transmitter 3 transmits the Pause frame to packet device 1, and starts measuring the time. Upon receipt of the Pause frame from transmitter 3, packet device 1 increases the ratio of the stop time period to the transmission time period for MAC frames in accordance with the fixed time stored in the Time field of the Pause frame to reduce the data rate of MAC frames transmitted to transmitter 3. As the measured time reaches the transmission stop time, transmitter 3 transmits a Pause release frame to packet device 1. Upon receipt of the Pause release frame from transmitter 3, packet device 1 transmits MAC frames.

Also, while this exemplary embodiment has shown an example in which monitor controller 5 transmits a path deletion request in response to a request from the operator, the path deletion request is not necessarily limited to the method of transmitting the path deletion request in response to the operator's request. For example, monitor controller 5 may autonomously transmit a path deletion request to transmitter 3. In this event, monitor controller 5 detects the data amount of each VC path stored in transmitter 4, and calculates differences in data amount among the VC paths. Then, when the difference in data amount between certain VC paths exceeds a predefined value, monitor controller 5 transmits a VC path deletion request to transmitter 3.

### (Second Exemplary Embodiment)

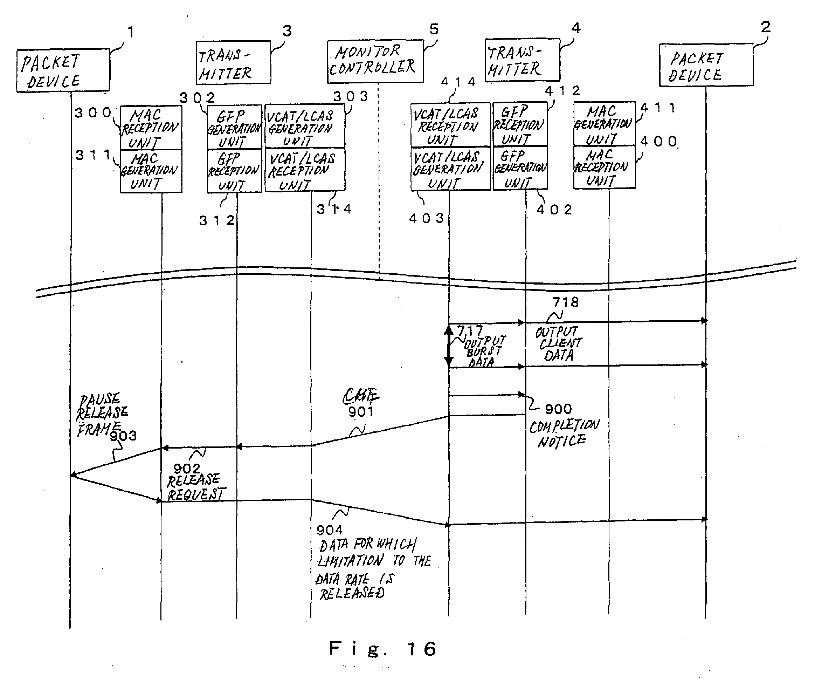

Fig. 16 is a sequence diagram showing the operation of a data transmission system according to a second exemplary embodiment.

The data transmission system of the second exemplary embodiment differs from the first exemplary embodiment in that it does not need to measure the rate limitation time by the rate control timer. The configuration of the data transmission system, and operations from the transmission of a path deletion request from monitor controller 5 to the completion of output of burst data are similar to those of the first exemplary embodiment. The following description will be given only of operations after burst data has been completely output.

As shown in Fig. 16, upon completion of the output of burst data from the VC buffer unit (not shown), VCAT/LCAS reception unit 414 notifies GFP generation unit 402 that the output of the burst data has been completed through control line 43 (not shown) (step 900).

GFP generation unit 402, when notified of the completion of the output of the burst data from VCAT/LCAS reception unit 414, stores output completion information that indicates completed burst data output in CMF, and transmits the CMF to transmitter 3 (step 901).

Upon receipt of the CMF from transmitter 4, GFP reception unit 312 of transmitter 3 recognizes the completion of the output of the burst data from the VC buffer unit, based on the output completion information stored in the CMF, and requests MAC generation unit 311 to release the limitation to the data rate (step 902).

MAC generation unit 311, when requested to release the limitation to the data rate from GFP reception unit 312, transmits a Pause release frame to packet device 1 (step 903).

Upon receipt of the Pause release frame from transmitter 3, packet device 1 releases the limitation to the data rate, and transmits MAC frames to packet device 2 through transmitters 3, 4 (step 904).

According to this exemplary embodiment, upon completion of the output of burst data from the VC buffer unit of transmitter 4, transmitter 4 notifies transmitter 3 to that effect. Upon receipt of the notification of the completion of the output of the burst data from transmitter 4, transmitter 3 requests packet device 1 to release the limitation to the data rate. Accordingly, since no rate control timer is required for releasing the limitation to the data rate, transmitters 3, 4 can be more simplified in configuration.

### (Third Exemplary Embodiment)

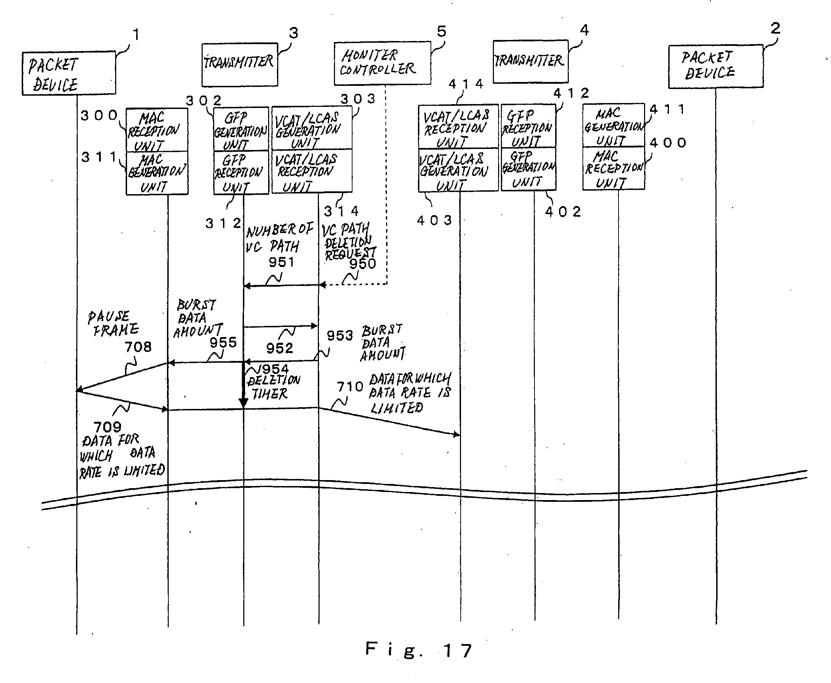

Fig. 17 is a sequence diagram showing the operation of a transmission network system according to a third exemplary embodiment.

The data transmission system of the third exemplary embodiment differs from the second exemplary embodiment in that the number of a VC path to be deleted and the value of the burst data amount is not transmitted/received between transmitter 3 and transmitter 4. The configuration of the data transmission system and operations after the deletion timer is started are similar to those of the first exemplary embodiment. The following description will be given of operations before the deletion timer is started.

Generally, the SDH/SONET transmission paths are the same in two directions for such reasons as ease of management, the mechanism of alarm transfer, and the like. Therefore, propagation delay times between transmitter 3 and transmitter 4 are the same in the two directions. As such, when the data rates of transmitter 3 and transmitter 4 are the same in the two directions, the burst data amount in VC buffer unit 313 of transmitter 3 is equal to the burst data amount in the VC buffer (not shown) of transmitter 4.

As shown in Fig. 17, when monitor controller 5 transmits a path deletion request to transmitter 3 (step 950), VCAT/LCAS generator 303 of transmitter 3 notifies GFP generation unit 302 of the number of a VC path to be deleted from members of VCG through control line 35 (step 951).

GFP generation unit 302, when notified of the number of the VC path to be deleted from VCAT/LCAS generation unit 303, notifies VCAT/LCAS reception unit 314 of the number of the VC path through control line 33 (step 952).

VCAT/LCAS reception unit 314, when notified of the number of the VC path from GFP generation unit 302, calculates the burst data amount from the amount of data stored in VC buffer unit 313 connected thereto, and the number of the VC path to be deleted, and notifies GFP reception unit 312 of the value of the calculated burst data amount through control line 36 (step 953).

Upon receipt of the value of the burst data amount from VCAT/LCAS reception unit 314, GFP reception unit 312 starts the deletion timer (step 954), and notifies MAC generation unit 311 of the value of the burst data amount (step 955).

According to this exemplary embodiment, when packet device 1 transmits data while limiting the data rate, the burst data amount of transmitter 4 is estimated on the basis of the value of the burst data amount of transmitter 3, and the data rate of packet device 1 is found from the value of the estimated burst data amount. Thus, transmitter 3 need not receive the value of the burst data amount from transmitter 4. Consequently, since the number of the VC path to be deleted and the value of the burst data amount need not be exchanged between transmitter 3 and transmitter 4, the load on the transmission paths between transmitter 3 and transmitter 4 can be relieved.

While the invention has been particularly shown and described with reference to exemplary embodiments thereof, the invention is not limited to these embodiments. It will be understood by those ordinarily skilled in the art that various changes in form and details may be made therein without departing from the spirit and scope of the present invention as defined by the claims.

## Claims

1. A data transmission system for transmitting/receiving data using a path group having a plurality of virtually coupled paths for use in transmission of data, comprising:
a first transmitter for transmitting input data through a plurality of paths belonging to the path group; and
a second transmitter for receiving the data transmitted from said first transmitter through the plurality of paths, temporarily storing an amount of data corresponding to a phase difference between the paths in a first buffer to absorb the phase difference, and outputting the data, whose phase difference has been absorbed, through a second buffer,
wherein when a path is deleted from the path group, said first transmitter is operable to reduce a data rate for data transmitted to said second transmitter, and then to delete the path from the path group.

2. The data transmission system according to claim 1, wherein:
said first transmitter is operable to determine an amount by which the data rate is reduced for the data transmitted to said second transmitter based on the amount of data temporarily stored in said first buffer included in said second transmitter.

3. The data transmission system according to claim 2, wherein said first transmitter is operable to determine the amount by which the data rate is reduced for the data transmitted to said second transmitter such that said second buffer does not overflow even if an amount of data corresponding to the phase difference temporarily stored in said first buffer of said second transmitter flows into said second buffer in bursts.

4. The data transmission system according to claim 1, wherein:
when propagation delay times of said first transmitter and said second transmitter are the same in two directions, said first transmitter is operable to estimate an amount of data temporarily stored in said first buffer of said second transmitter, based on a data reception situation of each path belonging to the path group received from said second transmitter, and is operable to use the estimated data amount in determining an amount by which the data rate is reduced for data transmitted to said second transmitter.

5. The data transmission system according to claim 4, wherein:
when the data rates of said first transmitter and said second transmitter are the same in two directions, said first transmitter comprises a third buffer for temporarily storing an amount of data of the path group received from said second transmitter corresponding to a phase difference of data among the plurality of paths, and is operable to estimate an amount of data temporarily stored in said first buffer of said second transmitter based on the amount of data temporarily stored in said third buffer.

6. The data transmission system according to any one of claims 1 to 5, wherein said first transmitter is operable to release a reduction in the data rate at a timing at which said first buffer can store data at the original data rate after the amount of data corresponding to the phase difference stored in said first buffer has been completely output.

7. The data transmission system according to claim 6, wherein:
said first transmitter comprises a rate limitation timer for releasing the reduction in the data rate,
wherein said rate limitation timer is set to a rate limitation time indicating a time required for data to be completely output from said first buffer of said second transmitter to said second buffer in bursts,
wherein said rate limitation timer is started when said first transmitter starts the reduction in the data rate for data transmitted to said second transmitter, and wherein said first transmitter is operable to release the reduction in the data rate for the data transmitted to said second transmitter when said rate limitation timer reaches the rate limitation time.

8. The data transmission system according to claim 6, wherein:
when an amount of data corresponding to the phase difference stored in said first buffer unit has been completely output after the data rate was reduced for the data transmitted from said first transmitter, said second transmitter is operable to transmit output completion information indicating the completion to said first transmitter, and
upon receipt of the output completion information from said second transmitter, said first transmitter is operable to release the reduction in the data rate for the data transmitted to said second transmitter.

9. The data transmission system according to any one of claims 1 to 8, further comprising a data device for transmitting data to said first transmitter, wherein:
said first transmitter is operable to newly determine a data rate, and to transmit data rate information indicating the determined data rate to said data device, and
said data device, upon receipt of the data rate information from said first transmitter, is operable to transmit data to said first transmitter at a data rate based on the data rate information.

10. The data transmission system according to any one of claims 1 to 9, wherein:
when an empty region is present in a payload of a frame for use in the transmission of data, said first transmitter is operable to store an idle frame in the empty region, to transmit the frame to said second transmitter, and to start processing for deleting the path, and
said second transmitter is operable to temporarily store the frame received from said first transmitter in said first buffer, to read the frame stored in said first buffer after said first transmitter completes the deletion of the path, to discard the idle frame included in the frame, and to output the data from which the idle frame has been discarded through said second buffer.

11. The data transmission system according to any one of claims 1 to 10, further comprising a monitor controller for controlling the operation of said first transmitter and said second transmitter,
wherein said first transmitter, upon receipt of a path deletion request instructing deletion of a path from said monitor controller, is operable to delete the path from the path group after the data rate is reduced for data transmitted to said second transmitter.

12. A transmitter for transmitting/receiving data to/from an opposing transmitter using a path group having a plurality of virtually coupled paths for use in transmission of data, comprising:
a transmission unit for transmitting input data to said opposing transmitter through a plurality of paths belonging to the path group; and
a reception unit for receiving data from said opposing transmitter through the plurality of paths, for temporarily storing an amount of the data corresponding to a phase difference among the respective paths in a first buffer to adjust the phase difference, and for outputting the data read from said first buffer through a second buffer, wherein when a path is deleted from the path group, said reception unit is operable to reduce a data rate for data transmitted from said transmitter to said opposing transmitter, and then to delete the path from the path group.

13. A data transmission control method for transmitting/receiving data between a first transmitter and a second transmitter using a path group having a plurality of virtually coupled paths for use in transmission of data,
wherein when a path is deleted from the path group, a data rate is reduced for data transmitted from said first transmitter to said second transmitter, and then the path is deleted from the path group.
